# EUROPÄISCHE PATENTANMELDUNG

(11) **EP 3 082 099 A1**
(43) Veröffentlichungstag der Anmeldung: **19.10.2016**
(21) Anmeldenummer: 16162849.0
(22) Anmeldetag: 30.03.2016
(51) Int. Cl.: G06Q 50/30, G06Q 30/02

(54) **INTERMODALES REISEDIENSTLEISTUNGSSYSTEM FÜR DIE KOMMUNIKATION MIT EINER MEHRZAHL VON UNTERSCHIEDLICHEN REISE- UND VERKEHRSDIENSTLEISTERN**

(30) Priorität: 16.04.2015 DE 102015206870
(71) Anmelder: Siemens Aktiengesellschaft, 80333 München (DE)
(72) Erfinder: Schäfer, Steffen, 80339 München (DE); Last, Holger, 80796 München (DE)

(57) **Zusammenfassung**

Es wird ein Reisedienstleistungssystem (1, 2) für die Kommunikation mit einer Mehrzahl von unterschiedlichen Reise- und Verkehrsdienstleistern beschrieben. Das Reisedienstleistungssystem (1, 2) weist eine mobile, einem Reisenden zugeordnete Kommunikationseinrichtung (MP) auf, welche dazu eingerichtet ist, drahtlos mit anderen Kommunikationseinrichtungen (MPO, MOB, FIB) zu kommunizieren. Es umfasst zudem eine Positionsermittlungseinrichtung (MOB, FIB), welche jeweils einem Verkehrsmittel (BS, ZG, SB) räumlich fest zugeordnet oder einer Verkehrsinfrastruktur (BH, FH) eines Reise- oder Verkehrsdienstleisters räumlich zugeordnet ist und dazu eingerichtet ist, aktuelle Positionsdaten (PD) des Verkehrsmittels oder der Verkehrsinfrastruktur zu ermitteln und auf diese Positionsdaten (PD) bezogene Reiseinformationen (RI) an die mobile Kommunikationseinrichtung (MP) drahtlos zu übertragen. Überdies umfasst das Reisedienstleistungssystem (1, 2) eine zentrale, von den Reise- oder Verkehrsdienstleistern unabhängige Kommunikationseinrichtung (MPO), welche dazu eingerichtet ist, eine Kommunikation zwischen der mobilen Kommunikationseinrichtung (MP) und einer Mehrzahl von den Reise- und Verkehrsdienstleistern zugeordneten Reisedienstleister-Informationssystemen (TOP1, ..., TOP5) zu gewährleisten. Es wird auch ein Verfahren (300) für die Kommunikation eines Reisenden mit einer Mehrzahl von unterschiedlichen Reise- und Verkehrsdienstleistern (TOP1, ..., TOP5) beschrieben.

## Beschreibung

Die Erfindung betrifft ein Reisedienstleistungssystem und ein Verfahren für die Kommunikation zwischen einem Reisenden und einer Mehrzahl von unterschiedlichen Reise- und Verkehrsdienstleistern.

Die Nutzung öffentlicher Verkehrsmittel wird heutzutage aus verschiedenen Gründen gefördert. Zunächst sind öffentliche Verkehrsmittel aufgrund von Skaleneffekten und Dichtevorteilen normalerweise energieeffizienter und damit umweltfreundlicher als mit Verbrennungsmotoren betriebene Individualverkehrsmittel. Weiterhin sind öffentliche Verkehrsmittel in Ballungsräumen und zwischen Ballungsräumen aufgrund der dort herrschenden Verkehrsdichte meist auch effizienter, schneller und zeitlich besser planbar, insbesondere dann, wenn sie wie bei U-Bahnen und Hochgeschwindigkeitszügen über ein eigenes Verkehrswegenetz verfügen, das ausschließlich von ihnen selbst genutzt wird. Überdies ist die Palette der Arbeits- und Freizeitaktivitätsmöglichkeiten während der in öffentlichen Verkehrsmitteln verbrachten Zeit nicht so eingeschränkt wie das insbesondere für Fahrer von Individualverkehrsmitteln, die sich selbst auf den Verkehr konzentrieren müssen, der Fall ist.

Häufig ist es jedoch bei einer Reise mit öffentlichen Verkehrsmitteln notwendig, unterschiedliche Verkehrsmittel, welche von verschiedenen Anbietern zur Verfügung gestellt werden, zu nutzen. Somit kann die Planung und Organisation für den Reisenden sehr komplex werden. Zusätzlich können unvorhergesehene Ereignisse und Ausfälle im Verkehrssystem Änderungen in der Planung auch während der Reise nötig werden lassen. Um die notwendigen Informationen für eine solche flexible Reaktion zu erhalten, nutzen Reisende häufig ihr Smartphone. Dabei können sich relevante Informationen auf die aktuell genutzte Reisedienstleistung, wie zum Beispiel aktuelle Ankunftszeiten beim nächsten Halt des Verkehrsmittels oder Informationen zum weiteren Verlauf der Reise, beispielsweise eine Karte des Zielbahnhofs oder Informationen zu einem notwendigen Zugwechsel, beziehen.

Wenn ein Reisender versucht, sich solche Informationen zu beschaffen, wird er häufig mit den folgenden Schwierigkeiten konfrontiert: In U-Bahnen und Hochgeschwindigkeitszügen ist es fast unmöglich, mit herkömmlichen Positionsermittlungssystemen, wie zum Beispiel Satellitennavigation, GSM-Triangulation oder Positionsermittlung per WLAN die Position des Reisenden zu ermitteln, da bei U-Bahnen unterirdisch oft keine Empfangsmöglichkeit für ein Positionssignal zur Verfügung steht und Hochgeschwindigkeitszüge zu schnell fahren, um deren Position mit Hilfe externer Positionsermittlungseinrichtungen exakt bestimmen zu können.

Die Genauigkeit herkömmlicher Positionsermittlungsverfahren reduziert sich in diesen Fällen oft auf einige Kilometer. Aufgrund dieser Ungenauigkeit ist es für den Benutzer auf Basis einer herkömmlichen Positionsbestimmung mit Hilfe seines Smartphones in vielen Fällen nicht möglich, die nächste Haltestation korrekt zu ermitteln. Ferner ist es für Reisende sehr mühsam, korrekte, oft lange und komplizierte offizielle Bezeichnungen des aktuellen Verkehrsservices zu erfahren und einzugeben, wenn sie Informationen dazu erhalten wollen. Insbesondere bei Reisen mit verschiedenen Verkehrsmitteln von verschiedenen Betreibern ist es für den Reisenden nicht immer ersichtlich, unter welcher Adresse im Internet oder von welcher Applikation Informationen zu einer bestimmten Verkehrsdienstleistung verfügbar sind.

In vielen Fällen ist der Reisende auch nicht nur an einer bestimmten Reisedienstleistung interessiert, sondern möchte verschiedene Möglichkeiten, seine Reise zu gestalten bzw. fortzusetzen, prüfen und Informationen von vielen verschiedenen Dienstleistern abrufen. Die Verfügbarkeit der gewünschten Informationen von den Reisedienstleistern und die exakte Position des Reisenden sind entscheidend, um Echtzeitinformationen zum Verlauf einer Reise zu erhalten. Um die Informationsbeschaffung für den Reisenden zu erleichtern, ist es wünschenswert, dass dem Reisenden das aktive Navigieren zwischen verschiedenen Webseiten verschiedener Anbieter erspart wird, da ein solches Vorgehen häufig unübersichtlich und unter Zeitdruck oft auch nicht schnell genug zu bewerkstelligen ist. Auch die Reisedienstleister sind daran interessiert, ihren Kunden besseren Service zu bieten, wobei die dafür bereitgestellte Infrastruktur möglichst kostengünstig sein sollte.

Bisher gibt es keine hinreichend exakten Positionsermittlungssysteme für U-Bahnen oder Hochgeschwindigkeitszüge und auch keine automatisierten Dienste, um ein bestimmtes Verkehrsmittel oder eine Internetadresse eines diesem Verkehrsmittel zugeordneten Verkehrsdienstleisters bzw. dessen Service zu finden. Meist müssen sich Reisende die gewünschten Informationen von unterschiedlichen Dienstleistern selbstständig beschaffen. Hierfür müssen sie individuelle Reiseinformationen zur Identifizierung eines jeweiligen Verkehrsdienstes und ihrer aktuellen geographischen Position selbsttätig herausfinden und auch Daten zur Anwahl der damit korrespondierenden Dienste in ihr Smartphone eingeben.

Als "Beacons" bezeichnete kleine fest installierte lokal wirkende Sender wurden bisher primär in stationären Situationen, wie zum Beispiel für das so genannte Proximity-Marketing eingesetzt (ein Beispiel für einen solchen Beacon ist ein unter dem Namen "iBeacon" vertriebenes Produkt eines bekannten IT-Unternehmens). Dabei kann ein solcher Sender zum Beispiel von einem einzelnen Ladengeschäft installiert werden. Da die Beacons nur im Nahbereich senden, wird automatisch die aktuelle Position eines Kunden mit dem Standort des jeweiligen Beacon korreliert, so dass von dem Beacon gezielt Werbung für Produkte in der Nähe der Position des Kunden auf dessen Smartphone gesendet werden kann. Üblicherweise müssen sich Kunden eine Smartphone-Applikation aus dem Internet herunterladen, bevor sie Werbebotschaften von den Beacons empfangen können. Auf diese Weise bleiben Kunden, die nicht ständig mit Werbung versorgt werden wollen, von solchen Informationen verschont.

Bisher wurden diese Sender jedoch für die Kommunikation mit Reisenden im Zusammenhang mit der Planung und Organisation einer Reise nicht in Erwägung gezogen. Der Grund dafür ist darin zu finden, dass während einer Reise die Kommunikation über solche Beacons nicht so leicht effektiv zu realisieren ist, da bei einer Reise ein Fahrzeug und Reisende in Bewegung sind. Zusätzliche Schwierigkeiten ergeben sich insbesondere dann, wenn Reisen mit unterschiedlichen Verkehrsmitteln von unterschiedlichen Betreibern durchgeführt werden. Wenn zum Beispiel nur ein Betreiber oder Anbieter eine Infrastruktur mit Beacons betreibt, um seine Kunden über Smartphone-Applikationen mit Informationen bezüglich seines Services oder allgemeinen Reiseinformationen zu versorgen, so können Reisende, die Kunden anderer Reiseanbieter sind und die Applikation des Betreibers der Beacons nicht auf ihrem Smartphone installiert haben, nicht automatisch auf diese Informationen zugreifen. Aufgrund der Komplexität der betrachteten Situation wird eine optimale kombinierte Nutzung der Verkehrsangebote von unterschiedlichen Anbietern erschwert.

Es ist somit eine Aufgabe der vorliegenden Erfindung, ein komfortableres und effektiveres Reisedienstleistungssystem, welches insbesondere auch für die Nutzung verschiedener Dienstleistungen von verschiedenen Anbietern geeignet ist, zu entwickeln.

Diese Aufgabe wird durch ein Reisedienstleistungssystem gemäß Patentanspruch 1 und durch ein Verfahren für die Kommunikation eines Reisenden mit einer Mehrzahl von unterschiedlichen Reise- und Verkehrsdienstleistern gemäß Patentanspruch 15 gelöst.

Das erfindungsgemäße Reisedienstleistungssystem für die Kommunikation mit einer Mehrzahl von unterschiedlichen Reise- und Verkehrsdienstleistern umfasst eine mobile, einem Reisenden zugeordnete Kommunikationseinrichtung. Diese mobile Kommunikationseinrichtung, auch als mobiles Endgerät bezeichnet, ist dazu eingerichtet, drahtlos mit anderen Kommunikationseinrichtungen zu kommunizieren. Ein solches mobiles Endgerät kann zum Beispiel ein Smartphone oder ein Tablet-Computer oder allgemein ein portabler Computer sein.

Teil des erfindungsgemäßen Reisedienstleistungssystems ist auch eine Positionsermittlungseinrichtung. Diese Positionsermittlungseinrichtung ist jeweils einem Verkehrsmittel räumlich fest zugeordnet oder einer Verkehrsinfrastruktur eines Reise- oder Verkehrsdienstleisters räumlich zugeordnet. Die Positionsermittlungseinrichtung ist dazu eingerichtet, aktuelle Positionsdaten des Verkehrsmittels oder der Verkehrsinfrastruktur zu ermitteln und auf diese Positionsdaten bezogene Reiseinformationen an die mobile Kommunikationseinrichtung drahtlos zu übertragen. Die auf die Positionsdaten bezogenen Reiseinformationen können beispielsweise Grob- und Fein-Bereichsinformation über die Position (engl.: "major region" und "minor region") sowie eine weltweit eindeutige Identifikationsnummer (UUID) umfassen. Die Grob-Bereichsinformation kann sich in einem öffentlichen Verkehrsmittel oder einer Verkehrsinfrastruktur zum Beispiel auf einen dem öffentlichen Verkehrsmittel oder der Verkehrsinfrastruktur allgemein zugeordneten geographischen Bereich beziehen. Sie kann sich auch auf eine Bezeichnung des benutzten Verkehrsmittels oder auf die aktuell benutzte Linie, wie zum Beispiel eine Verkehrsverbindung zwischen verschiedenen Orten, beziehen. Die Fein-Bereichsinformation kann konkrete Ortsinformationen mit einem direkten Bezug zu der aktuellen Position des Reisenden, wie zum Beispiel Informationen bezüglich der nächsten Haltestelle oder des direkten Umfelds des Reisenden umfassen.

Für die Ermittlung der Fein-Bereichsinformation werden für den Fall, dass sich die Positionsermittlungseinrichtung in einem mobilen Verkehrsmittel befindet, Messdaten oder externe Informationen benötigt. Aus diesen Daten wird eine exakte Position der Positionsermittlungseinrichtung ermittelt. Hierzu kann die Positionsermittlungseinrichtung vorzugsweise selbst entsprechende funktionale Einheiten entweder zum Empfang von Positionsinformationen aus externen Quellen oder zur direkten Ermittlung bzw. Messung der genauen eigenen Position, wie zum Beispiel Sensoren, aufweisen. Alternativ zu einer direkten Positionsbestimmung mit Hilfe von Sensoren kann zum Beispiel auch eine Abfrage von Daten eines Verkehrsleitsystems, Betriebsleitsystems oder Verkehrsüberwachungssystems vorgenommen werden, aus denen die aktuelle Position des Verkehrsmittels unter Berücksichtigung der Identifikationsinformation (UUID) der Positionsermittlungseinrichtung abgeleitet werden kann.

Das erfindungsgemäße Reisedienstleistungssystem umfasst eine zentrale, von den Reise- oder Verkehrsdienstleistern unabhängige Kommunikationseinrichtung (im Englischen auch als Multi Operator Backend bezeichnet), welche dazu eingerichtet ist, eine Kommunikation zwischen der mobilen Kommunikationseinrichtung und einer Mehrzahl von den Reise- und Verkehrsdienstleistern zugeordneten Reisedienstleister-Informationssystemen zu gewährleisten. Unter dem Gewährleisten einer Kommunikation zwischen der mobilen Kommunikationseinrichtung und einer Mehrzahl von den Reise- und Verkehrsdienstleistern zugeordneten Reisedienstleister-Informationssystemen soll insbesondere die Herstellung einer Datenübertragungsverbindung zwischen den Kommunikationspartnern bzw. eine entsprechende Adressierung geeigneter Reisedienstleister-Informationssysteme verstanden werden. Als unabhängige Kommunikationseinrichtung soll in diesem Fall eine Kommunikationseinrichtung verstanden werden, die nicht von einem der Reise- oder Verkehrsdienstleister monopolisiert betrieben wird, sondern mit allen Reisedienstleister-Informationssystemen bevorzugt gleichberechtigt kommuniziert. Die zentrale Kommunikationseinrichtung dient in dem Reisedienstleistungssystem als Vermittlungseinrichtung, welche zum Beispiel Anfragen von den Reisenden an die Reise- und Verkehrsdienstleister weitervermittelt und insbesondere die aktive Navigation und Adressierung einzelner Dienstleister übernimmt.

Eine solche Architektur hat den Vorteil, dass das System sowohl für die Reisenden als auch die Reise- und Verkehrsdienstleister sehr leicht zugreifbar und umfassend nutzbar ist. Im einfachsten Fall reicht es für den Benutzer des mobilen Endgeräts aus, eine Software-Bibliothek (engl. "Library") oder ein Anwendungsprogramm auf seinem mobilen Endgerät zu haben, welches die Kommunikation mit der zentralen Kommunikationseinrichtung gewährleistet bzw. regelt, so dass der Benutzer von dem Vorhalten und der Pflege einer Vielzahl von Applikationen (häufig auch als App bezeichnet), welche einzelnen Dienstleistern zugeordnet sind, befreit ist. Die von den einzelnen Applikationen zu leistenden Dienste oder zumindest ein Teil von deren Funktionen werden erfindungsgemäß bevorzugt von der zentralen Kommunikationseinrichtung ausgeübt. Verfügt die zentrale Kommunikationseinrichtung über entsprechend breitbandige Kanäle zu den übrigen Komponenten des Systems, so kann zum Beispiel auch eine beschleunigte Datenübertragung zwischen dem mobilen Endgerät und den Reisedienstleister-Informationssystemen erreicht werden.

Bei dem erfindungsgemäßen Verfahren für die Kommunikation eines Reisenden mit einer Mehrzahl von unterschiedlichen Reise- und Verkehrsdienstleistern wird mit Hilfe einer mobilen, einem Reisenden zugeordneten Kommunikationseinrichtung drahtlos mit anderen Kommunikationseinrichtungen kommuniziert. Dabei werden von einer Positionsermittlungseinrichtung, welche einem Verkehrsmittel räumlich fest zugeordnet ist oder einer Verkehrsinfrastruktur eines Reise- oder Verkehrsdienstleisters räumlich zugeordnet ist, aktuelle Positionsdaten und positionsdatenbezogene Reiseinformationen auf die mobile Kommunikationseinrichtung übertragen. Die Kommunikation zwischen der Positionsermittlungseinrichtung und der mobile Kommunikationseinrichtung bezüglich der Positionsdaten erfolgt bevorzugt unidirektional von der Positionsermittlungseinrichtung zu der mobilen Kommunikationseinrichtung, beispielsweise über den Standard Bluetooth Low Energy (BLE). Weiterhin erfolgt eine Kommunikation zwischen der mobilen Kommunikationseinrichtung und einer Mehrzahl von Reisedienstleistungssystemen, welche jeweils einem Reise- oder Verkehrsdienstleister zugeordnet sind, über eine zentrale, von den einzelnen Reise- oder Verkehrsdienstleistern unabhängige Kommunikationseinrichtung. Bevorzugt erfolgt die Kommunikation zwischen der mobilen Kommunikationseinrichtung und der Mehrzahl von Reisedienstleistungssystemen also nicht direkt, sondern über eine zentrale Kommunikationseinrichtung.

Einige Komponenten des erfindungsgemäßen Reisedienstleitungssystems können zum überwiegenden Teil in Form von Softwarekomponenten ausgebildet sein. Dies betrifft insbesondere funktionelle Merkmale der zentralen Kommunikationseinrichtung und der mobilen Kommunikationseinrichtung.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie weitergebildet sein. Zudem können im Rahmen der Erfindung auch die verschiedenen Merkmale unterschiedlicher Ausführungsbeispiele und Ansprüche auch zu neuen Ausführungsbeispielen kombiniert werden.

In einer bevorzugten Ausgestaltung umfasst das erfindungsgemäße Reisedienstleistungssystem eine Mehrzahl von Reisedienstleister-Informationssystemen, welche jeweils einem der Reise- oder Verkehrsdienstleister zugeordnet sind und dazu eingerichtet sind, aktuelle Informationen hinsichtlich der von dem jeweiligen Reise- oder Verkehrsdienstleister betriebenen Verkehrsmittel oder Verkehrsinfrastrukturen zu übermitteln. Beispielsweise halten die Reise- oder Verkehrsdienstleister Informationen bezüglich der Netze und aktuellen Fahrpläne der von ihnen betriebenen Verkehrsmittel bereit.

Besonders bevorzugt ist das erfindungsgemäße Reisedienstleistungssystem derart ausgestaltet, dass die zentrale Kommunikationseinrichtung dazu eingerichtet ist, von der mobilen Kommunikationseinrichtung Positionsdaten und/oder auf diese Positionsdaten bezogene Reiseinformationen zu empfangen und auf Basis dieser Daten geeignete Reisedienstleister-Informationssysteme automatisiert abzufragen und die empfangene Information an die mobile Kommunikationseinrichtung zurückzugeben. Beispielsweise erkennt die zentrale Kommunikationseinrichtung auf Basis der von dem mobilen Endgerät erhaltenen Daten, welche der Reise- und Verkehrsdienstleister für den Reisenden interessant sein könnten, und adressiert im Folgenden diese Verkehrsdienstleister. Für den Reisenden sind dann die Informationen von der zentralen Kommunikationseinrichtung ausgewählten Dienstleistern sichtbar und zugreifbar. Der Benutzer muss also nicht aktiv nach einzelnen Bezeichnungen oder gar Internetadressen von einzelnen Anbietern suchen, sondern erhält automatisiert Zugang zu den zu seinem Datenprofil passenden Anbietern. Dabei basiert das Datenprofil des Benutzers vorwiegend auf den von der Positionsermittlungseinrichtung abgefragten Informationen. Der Reisende erhält so, ohne selbst unbedingt aktiv mitwirken zu müssen, auf seine aktuelle Situation zugeschnittene Reiseinformationen bzw. Reisedienstleistungen von den entsprechenden Anbietern.

In einer Variante des erfindungsgemäßen Reisedienstleistungssystems ist die zentrale Kommunikationseinrichtung in dem Verkehrsmittel oder der Verkehrsinfrastruktur angeordnet. In einer dazu alternativen Variante ist die zentrale Kommunikationseinrichtung entfernt von dem Verkehrsmittel oder der Verkehrsinfrastruktur angeordnet.

Bevorzugt ist die zentrale Kommunikationseinrichtung dazu eingerichtet, mit der mobilen Kommunikationseinrichtung über eine sichere WLAN-Verbindung oder eine LTE-Verbindung zu kommunizieren. Eine WLAN-Verbindung eignet sich besonders für benutzernahe oder stationäre Varianten, bei denen die zentrale Kommunikationseinrichtung in einem Verkehrsmittel oder nahe einer stationären Verkehrsinfrastruktur angeordnet ist. Der Benutzer braucht sich dann nur mit seinem mobilen Endgerät in das lokale WLAN-Netz einzuklinken, ohne beispielsweise einen Zugang zu einem kostenpflichtigen Telefon- oder Datenübertragungsnetzwerk zu haben. Ist die zentrale Kommunikationseinrichtung dagegen entfernt von dem Benutzer, beispielsweise in einer zentralen stationären Einrichtung, angeordnet, so werden zur Kommunikation zwischen dem mobilen Endgerät und der zentralen Kommunikationseinrichtung Datenfernübertragungsnetze, wie zum Beispiel Netze nach dem UMTS-Standard oder dem LTE-Standard, benötigt.

Die Positionsermittlungseinrichtung des erfindungsgemäßen Reisedienstleistungssystems ist bevorzugt in dem zugeordneten Verkehrsmittel fest installiert. Wird die Positionsermittlungseinrichtung also ständig mitgeführt, ist zu jedem Zeitpunkt eine Datenübertragung zu den mobilen Endgeräten von Reisenden, die sich in dem Verkehrsmittel befinden, gewährleistet. Durch die Übertragung einer Positionsinformation als Kontextinformation an die mobilen Endgeräte und von dort an die zentrale Kommunikationseinrichtung lässt sich so eine Position eines Reisenden nicht nur ermitteln, sondern auch automatisiert für die Kommunikation zwischen einem Reisenden und Reise- und Verkehrsdienstleistern nutzen.

Alternativ kann die Positionsermittlungseinrichtung des erfindungsgemäßen Reisedienstleistungssystems auch eine standortgebundene Positionsermittlungseinrichtung umfassen, welche in oder an einer Verkehrsinfrastruktur, vorzugsweise einem Bahnhof oder Flughafen oder U-Bahnhof, fest installiert ist und eine Information bezüglich der Position der Verkehrsinfrastruktur bereitstellt.

In einer effektiven Ausgestaltung des erfindungsgemäßen Reisedienstleistungssystems ist die Positionsermittlungseinrichtung dazu eingerichtet, zusätzlich zu der Positionsinformation auch eine Identifikationsinformation des zugeordneten Verkehrsmittels oder der zugeordneten Verkehrsinfrastruktur und positionsdatenbezogene Reiseinformationen an die mobile Kommunikationseinrichtung zu übermitteln. Die Identifikationsinformation kann zum Beispiel mit zusätzlichen Informationen, den auf die Positionsdaten bezogenen Reiseinformationen, in einer Datenbank verknüpft sein, welche die Bezeichnung des Verkehrsmittels, die aktuell gefahrene Strecke und Details zu den Haltestellen, eventuell auch Fahrplaninformationen betreffen. Die Positionsermittlungseinrichtung kann zum Beispiel einen kleinen Sender umfassen, wie es bei den vorstehend als Beacons bezeichneten Einheiten der Fall ist. Sie kann auch eine zur Nahfeldkommunikation geeignete Datenübertragungseinheit, auch als NFC-Tag bezeichnet, umfassen oder eine über WLAN kommunizierende Einheit aufweisen.

In einer besonders benutzerfreundlichen Ausgestaltung des erfindungsgemäßen Reisedienstleistungssystems umfasst die mobile Kommunikationseinrichtung einen Programmbaustein, welcher in eine Mehrzahl von auf der mobilen Kommunikationseinrichtung gespeicherten Anwendungsprogrammen der einzelnen Reise- oder Verkehrsdienstleister integrierbar ist. Dabei ist der Programmbaustein bevorzugt als Softwareentwicklungssystem (englisch software development kit = SDK oder software library) ausgebildet. Ein solcher Programmbaustein ist dazu eingerichtet, die Kommunikation mit der Mehrzahl von Reisedienstleister-Informationssystemen mit Hilfe der zentralen Kommunikationseinrichtung und unter Verwendung der von der mobilen Kommunikationseinrichtung erfassten Positionsdaten und der auf die Positionsdaten bezogenen Reiseinformationen zu gewährleisten.

Zusätzlich kann das erfindungsgemäße Reisedienstleistungssystem eine Positionsermittlungseinrichtung-Verwaltungseinrichtung aufweisen, welche dazu eingerichtet ist, die jeweiligen Positionsermittlungseinrichtungen näher kennzeichnende Informationen zu speichern und an die zentrale Kommunikationseinrichtung die gespeicherten Informationen auf Anfrage zu übermitteln. In dieser Verwaltungseinrichtung sind die jeweiligen Identifikatoren (UUIDs) der einzelnen Positionsermittlungseinrichtungen sowie die jeweiligen Orte, an denen die zugeordneten Positionsermittlungseinrichtungen angeordnet sind, gespeichert.

In einer speziellen Variante des erfindungsgemäßen Reisedienstleistungssystems ist die Positionsermittlungseinrichtung-Verwaltungseinrichtung dazu eingerichtet, näher kennzeichnende Informationen bezüglich des Zeitpunkts, an dem eine Positionsermittlungseinrichtung installiert wurde, und bezüglich des Eigentümers der Positionsermittlungseinrichtung zu speichern.

Bevorzugt ist zumindest eine der Mehrzahl von Reisedienstleister-Informationssystemen dazu eingerichtet, zumindest eine der folgenden Reiseinformationen über die zentrale Kommunikationseinrichtung der mobilen Kommunikationseinrichtung zur Verfügung zu stellen:
- Fahrplaninformationen,
- Verfügbarkeit eines Verkehrsmittels,
- Kapazitätsauslastung eines von einem zugeordneten Reise- oder Verkehrsdienstleister betriebenen Verkehrsmittels,
- Buchungsinformationen betreffend ein von dem zugeordneten Reise- oder Verkehrsdienstleister betriebenes Verkehrsmittel,
- geografische Lageinformation zu einer Verkehrsinfrastruktur, wie zum Beispiel einem Bahnhof, beispielsweise für Zwecke der Navigation.

Überdies kann das erfindungsgemäße Reisedienstleistungssystem zusätzliche Datenbanken aufweisen, welche mit der zentralen Kommunikationseinrichtung über eine Datenverbindung verbunden sind. Diese Datenbanken können beispielsweise Informationen bezüglich für Reisende relevanter Dienstleistungen und Warenangebote speichern. Zur Informationsübermittlung sind diese zusätzlichen Datenbanken über die zentrale Kommunikationseinrichtung mit der mobilen Kommunikationseinrichtung verbindbar. Beispielsweise kann es sich bei den Warenangeboten um Angebote für den Reisebedarf handeln oder um Werbung für Produkte und Dienstleistungen, welche auf eine bestimmte Reise oder Reisestrecke zugeschnitten ist. Dabei kann die gezielte Werbung auf Basis der von der Positionsermittlungseinrichtung erhaltenen Informationen spezifiziert werden.

Um eine Position eines Reisenden auch unabhängig von externen Positionsermittlungssystemen, wie zum Beispiel Satellitennavigationssystemen oder GPRS-Triangulation, ermitteln zu können, umfasst die Positionsermittlungseinrichtung des erfindungsgemäßen Reisedienstleistungssystems bevorzugt eine Sensorvorrichtung. Die Sensorvorrichtung weist bevorzugt eine Anzahl von Sensoren auf, welche dazu ausgebildet sind, eine Bewegung der Sensorvorrichtung und/oder physikalische Größen einer Umgebung der Sensorvorrichtung zu erfassen und entsprechende Messwerte auszugeben, einen Datenspeicher, welcher dazu ausgebildet ist, zu vorgegebenen Positionen auf der vorgegebenen Route Referenzmesswerte für die Sensoren zu speichern, und eine Recheneinrichtung, welche dazu ausgebildet ist, die von den Sensoren ausgegebenen Messwerte mit den gespeicherten Referenzmesswerten zu vergleichen und bei einer Übereinstimmung der von den Sensoren ausgegebenen Messwerte mit den Referenzmesswerten die den jeweiligen Referenzmesswerten entsprechende Position als die aktuelle Position der Positionsermittlungseinrichtung zu ermitteln. Eine solche Sensorvorrichtung ist in der deutschen Patentanmeldung mit dem amtlichen Aktenzeichen Nr. 102 01 52 055 35.3 beschrieben, auf die an dieser Stelle Bezug genommen wird.

Die Erfindung wird im Folgenden unter Hinweis auf die beigefügten Figuren anhand von Ausführungsbeispielen noch einmal näher erläutert. Es zeigen:
- FIG 1: eine schematische Darstellung eines Reisedienstleistungssystems gemäß einem ersten Ausführungsbeispiel der Erfindung,
- FIG 2: eine schematische Darstellung eines Reisedienstleistungssystems gemäß einem zweiten Ausführungsbeispiel der Erfindung,
- FIG 3: ein Verfahren zur Kommunikation zwischen einem Reisenden und einer Mehrzahl von unterschiedlichen Reise- und Verkehrsdienstleistern.

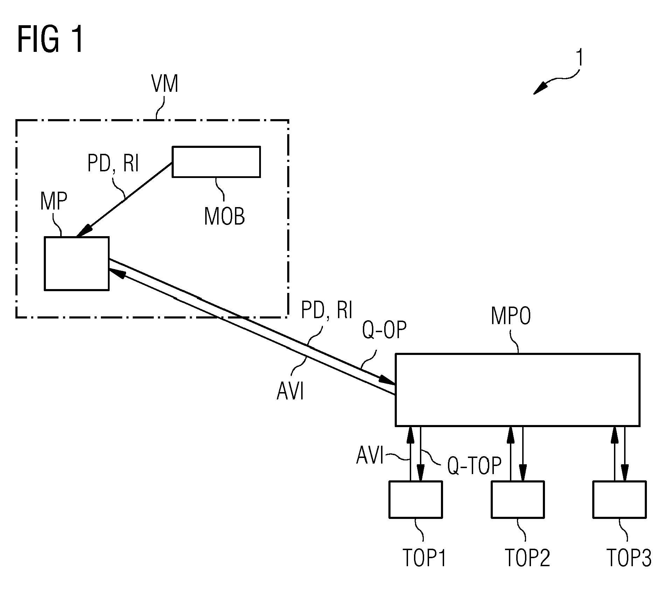

In FIG 1 ist ein Reisedienstleistungssystem 1 gemäß einem ersten Ausführungsbeispiel der Erfindung gezeigt. Teile MOB, MP des Reisedienstleistungssystems 1 sind in einem mobilen öffentlichen Verkehrsmittel VM, wie zum Beispiel ein Hochgeschwindigkeitszug, angeordnet. In dem öffentlichen Verkehrsmittel VM ist zum Beispiel eine Positionsermittlungseinrichtung MOB fest installiert. Diese Positionsermittlungseinrichtung MOB ist nicht nur dazu eingerichtet, die geographische Position des öffentlichen Verkehrsmittels VM zu ermitteln, sondern auch zusätzlich auf die aktuelle Position bezogene Reiseinformationen, wie zum Beispiel die aktuelle Reiseroute mit Start- und Zielort des öffentlichen Verkehrsmittels, zu ermitteln sowie die offizielle Bezeichnung des Verkehrsmittels, wie zum Beispiel eine offizielle Zugbezeichnung, zu ermitteln bzw. wiederzugeben.

Die genannten Positionsermittlungseinrichtungen MOB, insbesondere Beacons, sind in öffentlichen Verkehrsmitteln, wie zum Beispiel Zügen, Straßenbahnen oder Bussen, montiert. Mit diesen Positionsermittlungseinrichtungen MOB kann zum Beispiel die exakte Position eines Reisenden, die offizielle Bezeichnung des Verkehrsmittels oder der Infrastruktur, in dem bzw. in deren Nähe sich der Reisende gerade aufhält, und ein zugeordneter Service ermittelt werden. Sind diese Informationen bereitgestellt, so können sie dazu genutzt werden, um zusätzliche reisebezogene Informationen von den Reise- und Verkehrsdienstleistern dazu zu erhalten.

Prinzipiell lassen sich insbesondere die bereits erwähnten Beacons, welche kostengünstige Sender und Softwareprotokolle aufweisen, um Smartphones Informationen mitzuteilen, wenn diese sich in der Nähe befinden, als Positionsermittlungseinrichtungen MOB nutzen. Die Datenübertragung dieser Beacons wird üblicherweise mit Hilfe einer energiesparenden Bluetooth-Technik BLE (BLE = Bluetooth Low Energy) vorgenommen. Beacons sind klein und üblicherweise mit einer Batterie zur Energieversorgung ausgestattet und werden verwendet, um eine exakte Position und damit verbundenen Kontext an in der Nähe der Beacons befindliche mobile Endgeräte MP zu übermitteln. Dabei kann der Kontext zum Beispiel mit der Position des Beacons korreliert sein. Die Beacons übermitteln eine kleine Menge Information an alle dafür freigeschalteten mobilen Kommunikationseinrichtungen in einem Bereich von einigen Zentimetern bis etwa 70 m oder unter günstigen Umständen gar bis 400 m Entfernung.

Die Information, die von einem Beacon an ein Smartphone übermittelt wird, umfasst einen standardisierten Identifikationscode (UUID = Universally Unique Identifier). Dieser Identifikationscode kann dazu verwendet werden, um die Position bzw. einen Nahbereich in der Nähe einer Position eines Beacons zu identifizieren. Zusätzlich zur geographischen Position des Reisenden kann im Verkehrswesen anhand des Identifikationscodes des Beacons auch eine dem Beacon zugeordnete Infrastruktur, wie zum Beispiel ein Bahnhof oder ein Waggon, in dem sich ein Reisender gerade befindet, eindeutig identifiziert werden.

Überdies können zusätzlich zu der direkten geographischen Position als Kontext sogenannte Bereichsinformationen übermittelt werden. Dabei wird zum Beispiel zwischen Fein-Bereichsinformationen für den Nahbereich des Beacons und Grob-Bereichsinformationen für den Fernbereich des Beacons unterschieden. Grob-Bereichsinformationen eines Beacons, das an einem Bahnhof an einem Bahnsteig eines U-Bahnterminals installiert ist, können zum Beispiel den Namen des Bahnhofs, wie zum Beispiel "Hauptbahnhof München, Deutschland" umfassen. Fein-Bereichsinformationen eines Beacons können zum Beispiel eine Bezeichnung eines Bahnsteigs eines U-Bahnterminals, an dem sich ein Reisender gerade befindet, wie zum Beispiel "U-Bahnsteig für U4/U5", umfassen.

Ein mobiles Beacon, welches in einem Hochgeschwindigkeitszug montiert ist, kann zum Beispiel als Grob-Bereichsinformation die Bezeichnung des Zugs und den Start- und Zielbahnhof umfassen, wie zum Beispiel "ICE 582 von München nach Berlin". Als Fein-Bereichsinformation kann das mobile Beacon zum Beispiel die nächste Haltestation, wie zum Beispiel "nächster Halt: Nürnberg", umfassen. Die zu übermittelnden geographischen Informationen kann das Beacon beispielsweise von einer in dem Verkehrsmittel installierten Sensorvorrichtung (nicht gezeigt) empfangen. Beispielsweise kann das Beacon mit seinem Identifikator einem bestimmten Verkehrsmittel, das auf einer bestimmten Strecke verkehrt, eindeutig zugeordnet sein. Um die zusätzliche "Fein-Bereichsinformation" liefern zu können, erhält es Nachrichten von der Sensoreinrichtung bezüglich einer aktuellen geographischen Position. Andere Teile MPO, TOP1, TOP2, TOP3 des Reisedienstleistungssystems 1 sind in der in FIG 1 gezeigten Ausführungsform außerhalb des öffentlichen Verkehrsmittels VM angeordnet. Beispielsweise kann eine zentrale Kommunikationseinrichtung MPO in einem zentralen Servicezentrum des Betreibers des Reisedienstleistungssystems 1 untergebracht sein. Alternativ kann die zentrale Kommunikationseinrichtung MPO auch in dem Verkehrsmittel VM angeordnet sein.

Eine Mehrzahl von Reisedienstleister-Informationssystemen TOP1, TOP2, TOP3 sind beispielsweise im Internet, d.h. konkret auf Webservern in entsprechenden Serverzentren oder auch von den Betreibern selbst betriebenen Webservern gespeichert. Erfindungsgemäß werden eine Positionsinformation PD sowie Kontextinformationen RI für Anfragen von dem mobilen Endgerät MP an die Reisedienstleister-Informationssysteme TOP1, TOP2, TOP3 genutzt. Im Detail werden diese Informationen an die zentrale Kommunikationseinrichtung zusammen mit einer Anfrage Q-OP oder Anweisung übermittelt, welche sich auf eine Interaktion mit einem oder mehreren Reisedienstleister-Informationssystemen TOP1, TOP2, TOP3 bezieht.

Auf Basis der empfangenen Informationen PD, TI, Q-OP sucht sich die zentrale Kommunikationseinrichtung MPO die passenden Reisedienstleister-Informationssysteme TOP1, TOP2, TOP3 und deren Internetadressen und stellt eine Kommunikationsverbindung zwischen dem mobilen Endgerät MOB und den passenden Reisedienstleister-Informationssystemen TOP1, TOP2, TOP3 her, übermittelt zusätzlich die erfasste Positionsinformation PD sowie die Kontextinformation RI an die passenden Reisedienstleister-Informationssysteme TOP1, TOP2, TOP3 sowie eine entsprechende Anfrage Q-TOP auf Basis der empfangenen Anfrage Q-OP von dem mobilen Endgerät MP.

Anschließend können die adressierten Reisedienstleister-Informationssysteme TOP1, TOP2, TOP3 auf Basis der empfangenen Positionsinformation PD sowie der Kontextinformation RI Reiseinformationen AVI an das mobile Endgerät MP übermitteln. Die Reiseinformationen AVI können zum Beispiel Fahrplaninformationen oder tatsächliche Ankunftszeiten, verfügbare Verbindungen bei den nächsten Haltestationen von Drittanbietern oder auch die Verfügbarkeit von Individualverkehrsmitteln an den nächsten Haltestationen, wie zum Beispiel Mietfahrzeuge oder Mietfahrräder, oder auch Informationen über Touristenattraktionen betreffen. Die Datenübermittlung zwischen den Reisedienstleister-Informationssystemen TOP1, TOP2, TOP3 und dem mobilen Endgerät MP läuft bevorzugt über die zentrale Kommunikationseinrichtung MPO als Zwischenstation.

In einer Ausführungsform hat die zentrale Kommunikationseinrichtung MPO die zusätzliche Funktion, die von den Reisedienstleister-Informationssystemen TOP1, TOP2, TOP3 erhaltenen Informationen vor der Weiterleitung an das mobile Endgerät MP auf Basis der empfangenen Positionsinformation PD sowie der Kontextinformation RI und der Anfrage Q-OP von dem mobilen Endgerät MP beispielsweise nach Relevanz zu ordnen und entsprechend zu kombinieren und so geordnet an das mobile Endgerät MOB weiterzuleiten.

Sind in den von dem mobilen Endgerät MP an die zentrale Kommunikationseinrichtung MPO gesandten Informationen bereits konkrete Bezeichnungen von einzelnen Reisedienstleister-Informationssystemen TOP1, TOP2, TOP3 enthalten, so sucht die zentrale Kommunikationseinrichtung MPO die diesen Reisedienstleister-Informationssystemen TOP1, TOP2, TOP3 zugeordneten Internetadressen und stellt eine Verbindung zwischen dem mobilen Endgerät MP und den Reisedienstleistern TOP1, TOP2, TOP3 her.

Die Datenübertragung über die zentrale Kommunikationseinrichtung erleichtert die Planung oder Änderung der Planung einer Reise, bei welcher auf eine Vielzahl von unterschiedlichen Reisedienstleistern und Verkehrsmitteln zurückgegriffen werden muss. Anstatt dass der Reisende einzelne Dienstleister auffinden muss und deren Daten selbst verarbeiten bzw. kombinieren muss, werden diese Aufgaben von einer unabhängigen zentralen Kommunikationseinrichtung MPO wahrgenommen. Umgekehrt erleichtert ein solches System 1 auch den Zugang der unterschiedlichen Reisedienstleister TOP1, TOP2, TOP3 zu ihrem Kunden, da sie von ihm selbst nicht gesucht und gefunden, ja ihm noch nicht einmal bekannt sein müssen, um Informationen und Angebote an den Reisenden übermitteln zu können.

Überdies kann der Reisende nicht nur in Abwärtsrichtung (Downstream) Informationen von den Reisedienstleistern TOP1, TOP2, TOP3 erhalten, sondern auch in Aufwärtsrichtung (upstream) selbst aktiv Daten an die Reisedienstleister übermitteln, wie zum Beispiel im Rahmen von Buchungsvorgängen oder Bezahlvorgängen oder bei der Übermittlung von Rückmeldungen des Kunden bzw. Reisenden hinsichtlich der Qualität des Services der Reisedienstleister TOP1, TOP2, TOP3 bzw. des benutzten Verkehrsmittels VM.

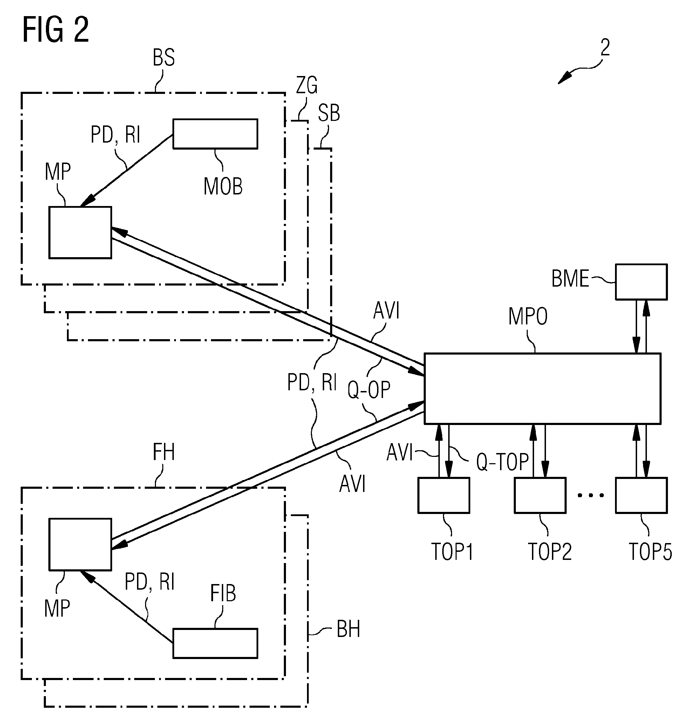

In FIG 2 ist ein Reisedienstleistungssystem 2 gemäß einem zweiten Ausführungsbeispiel der Erfindung gezeigt. Im Gegensatz zu dem ersten Ausführungsbeispiel umfasst das System 2 nicht nur ein mobiles öffentliches Verkehrsmittel VM, sondern eine Vielzahl von unterschiedlichen Verkehrsmitteln, in der gezeigten Ausführungsform ein Bus BS, ein Zug ZG und eine Straßenbahn SB. Zusätzlich umfasst das System 2 auch noch stationäre Infrastrukturelemente, in diesem konkreten Fall ein Bahnhof BG und ein Flughafen FH. Entsprechend umfasst das System 2 auch eine größere Anzahl von Reise- und Verkehrsdienstleistern TOP1,..., TOP5. Die in FIG 1 bereits erwähnten Elemente MP, MOB, MPO, TOP1, ..., TOP5, übermittelten Daten AVI, PD, RI und Anfragen Q-OP, Q-TOP werden hiermit nochmals referenziert, ohne erneut einzeln beschrieben zu werden. Zusätzlich ist in FIG 2 dem Flughafen FH zugeordnet eine feste Positionsermittlungseinrichtung FIB gezeigt, sowie ein Smartphone MP, dessen Benutzer sich gerade im Bereich des Flughafens FH aufhält. Dort bekommt der Benutzer von der festen Positionsermittlungseinrichtung FIB geographische Informationen bezüglich seines Standorts und über die nähere oder fernere Umgebung.

Beispielsweise umfassen die Information bezüglich der ferneren Umgebung die Bezeichnung des Flughafens, wie zum Beispiel "Flughafen München" und die Informationen bezüglich der näheren Umgebung eine Bezeichnung des Teilabschnitts, in dem sich der Reisende gerade aufhält, wie zum Beispiel "Terminal 2". Überdies ist in FIG 2 noch eine Positionsermittlungseinrichtung-Verwaltungseinrichtung BME gezeigt, welche dazu eingerichtet ist, näher kennzeichnende Informationen bezüglich des Zeitpunkts, an dem eine Positionsermittlungseinrichtung MOB, FIB installiert wurde, und bezüglich des Eigentümers der Positionsermittlungseinrichtung MOB, FIB zu speichern. Die Positionsermittlungseinrichtung-Verwaltungseinrichtung BME kann auch eine Datenbank umfassen, in der eine Zuordnung zwischen einem Identifikator (UUID) einer Positionsermittlungseinrichtung und der Bezeichnung des Verkehrsmittels oder der Infrastruktur, bei dem bzw. bei der die jeweilige Positionsermittlungseinrichtung lokalisiert ist, gespeichert ist.

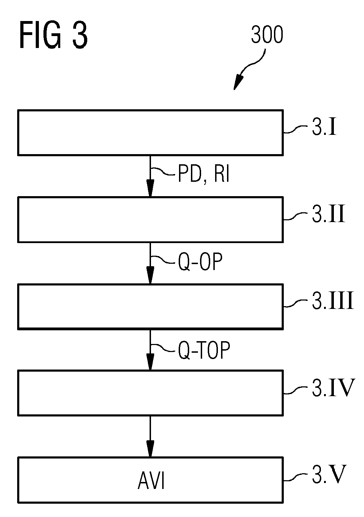

In FIG 3 ist ein Flussdiagramm gezeigt, mit dem ein Verfahren 300 zur Kommunikation eines Reisenden mit einer Mehrzahl von unterschiedlichen Reise- und Verkehrsdienstleistern TOP1, ..., TOP5 veranschaulicht ist. Bei dem Schritt 3.I werden zunächst von einem Reisenden mit Hilfe eines mobilen Endgeräts MP von einer Positionsermittlungseinrichtung MOB, FIB, Positionsdaten PD und positionsdatenbezogene Reiseinformationen RI abgefragt bzw. empfangen. Die Positionsermittlungseinrichtung MOB, FIB ist dabei einem Verkehrsmittel BS, ZG, SB räumlich fest zugeordnet oder einer Verkehrsinfrastruktur BH, FH eines Reise- oder Verkehrsdienstleisters OP räumlich zugeordnet. Der Reisende muss sich zum Empfang der genannten Informationen in der Nähe der Positionsermittlungseinrichtung MOB, FIB aufhalten.

Bei dem Schritt 3.II wird von dem mobilen Endgerät MP eine Kommunikation mit einem oder mehreren Reise- und Verkehrsdienstleistern gestartet, indem zunächst die von der Positionsermittlungseinrichtung MOB, FIB empfangenen Daten PD, RI sowie eine zusätzliche Dienstanfrage Q-OP an eine zentrale Kommunikationseinrichtung übermittelt werden. Die Dienstanfrage kann sich zum Beispiel auf die Ausführung eines Buchungs- und/oder Bezahlvorgangs oder die Abfrage von Fahrplanauskünften beziehen.

Bei dem Schritt 3.III werden von der zentralen Kommunikationseinrichtung MPO auf Basis der von dem mobilen Endgerät MP empfangenen Informationen ein oder mehrere Reisedienstleistungssysteme TOP1, ..., TOP5 adressiert und eine Kommunikationsverbindung zwischen den ein oder mehreren Reisedienstleistungssystemen TOP1, ..., TOP5 und dem mobilen Endgerät MP hergestellt. Wurde seitens des mobilen Endgeräts MP bereits eine konkrete Anfrage Q-OP nach einer bestimmten Reisedienstleistung gestellt, wird eine entsprechende Anfrage Q-TOP mit einer korrekten Adressierung von der zentralen Kommunikationseinrichtung MPO an ein geeignetes Reisedienstleistungssystem TOP1, ..., TOP5 übermittelt.

Bei dem Schritt 3.IV führt nun der Reisende R seine beabsichtige Aktion, wie zum Beispiel eine Buchung oder einen Bezahlvorgang oder eine Abfrage von zusätzlichen Reiseinformationen, in Kommunikation mit ihm verbundenen Reisedienstleistungssystemen TOP1, ..., TOP5 durch. In dem in FIG 3 veranschaulichten Fall werden bei dem Schritt 3.IV Fahrplaninformationen AVI von mehreren Reisedienstleistungssystemen TOP1, ..., TOP5 abgefragt und anschließend bei dem Schritt 3.V werden diese abgefragten Informationen AVI von den adressierten Reisedienstleistungssystemen TOP1, ..., TOP5 an das mobile Endgerät MP übermittelt. Wie bereits erwähnt, muss der Benutzer des mobilen Endgeräts MP auf der Suche nach den Fahrplaninformationen nicht aktiv nacheinander zu einzelnen Anbietern im Internet navigieren. Er benötigt noch nicht einmal eine Applikation auf seinem Smartphone, die eine solche Navigation für ihn automatisiert ausführt. Letzteres hat zum Beispiel den zusätzlichen Vorteil, dass der Reisende keine ständigen Aktualisierungen, welche zum Beispiel die Adressen neuer Dienstleister oder neue Dienstleistungsfunktionen betreffen, an einer Applikation auf seinem mobilen Endgerät vornehmen muss. Somit werden die Effektivität und der Komfort des Reisedienstleistungssystems 1, 2 für den Reisenden verbessert. Für die an dem Reisedienstleistungssystem beteiligten Reisedienstleister ist ebenfalls eine Verbesserung erreicht, da sie nun sicher sein können, dass der Reisende die Möglichkeit hat, auf ihre Dienste zugreifen zu können. Dieser Zugriff wird erfindungsgemäß für jeden an dem System beteiligten Reisedienstleister auch dann erleichtert, wenn sich ein Reisender gerade in einem Verkehrsmittel von einem anderen Betreiber bzw. Reisedienstleister befindet.

Es wird abschließend noch einmal darauf hingewiesen, dass es sich bei den vorbeschriebenen Reisedienstleistungssystemen 1, 2 und dem beschriebenen Verfahren 300 lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. So wurde das Reisedienstleistungssystem nur im Zusammenhang mit öffentlichen Verkehrsmitteln BS, ZG, SB dargestellt, jedoch ist es auch möglich, mit einem mobilen Endgerät MP von einem Privatfahrzeug aus auf Positionsermittlungseinrichtungen zuzugreifen und mit der von diesen erhaltenen Information über die zentrale Kommunikationseinrichtung MPO auf die Ressourcen von Reise- und Verkehrsdienstleistern zuzugreifen. Dies kann zum Beispiel zu dem Zweck geschehen, eine Reise unter teilweiser Benutzung von öffentlichen und privaten Verkehrsmitteln durchzuführen, oder auch nur, um auf Informationen von verschiedenen Verkehrsinformationsanbietern leichter zugreifen zu können. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Reisedienstleistungssystem (1, 2) für die Kommunikation mit einer Mehrzahl von unterschiedlichen Reise- und Verkehrsdienstleistern, aufweisend:
- eine mobile, einem Reisenden zugeordnete Kommunikationseinrichtung (MP), welche dazu eingerichtet ist, drahtlos mit anderen Kommunikationseinrichtungen (MPO, MOB, FIB) zu kommunizieren,
- eine Positionsermittlungseinrichtung (MOB, FIB), welche jeweils einem Verkehrsmittel (BS, ZG, SB) räumlich fest zugeordnet oder einer Verkehrsinfrastruktur (BH, FH) eines Reise- oder Verkehrsdienstleisters räumlich zugeordnet ist und dazu eingerichtet ist, aktuelle Positionsdaten (PD) des Verkehrsmittels (BS, ZG, SB) oder der Verkehrsinfrastruktur (BH, FH) zu ermitteln und auf diese Positionsdaten (PD) bezogene Reiseinformationen (RI) an die mobile Kommunikationseinrichtung (MP) drahtlos zu übertragen,
- eine zentrale, von den Reise- oder Verkehrsdienstleistern unabhängige Kommunikationseinrichtung (MPO), welche dazu eingerichtet ist, eine Kommunikation zwischen der mobilen Kommunikationseinrichtung (MP) und der Mehrzahl von Reise- und Verkehrsdienstleistern zugeordneten Reisedienstleister-Informationssystemen (TOP1, ..., TOP5) zu gewährleisten,
wobei die zentrale Kommunikationseinrichtung (MPO) dazu eingerichtet ist, von der mobilen Kommunikationseinrichtung (MP) Positionsdaten (PD) und/oder auf diese Positionsdaten (PD) bezogene Reiseinformationen (RI) zu empfangen und auf Basis dieser Daten (PD, RI) geeignete Reisedienstleister-Informationssysteme (TOP1, ..., TOP5) automatisiert zu adressieren und eine Kommunikationsverbindung zwischen der mobilen Kommunikationseinrichtung (MP) und den adressierten Reisedienstleister-Informationssystemen (TOP1, ..., TOP5) herzustellen.

2. Reisedienstleistungssystem (1, 2) nach Anspruch 1, aufweisend eine Mehrzahl von Reisedienstleister-Informationssystemen (TOP1, ..., TOP5), welche jeweils einem der Reise- oder Verkehrsdienstleister zugeordnet sind und dazu eingerichtet sind, aktuelle Informationen (AVI) hinsichtlich der von dem jeweiligen Reise- oder Verkehrsdienstleister betriebenen Verkehrsmittel (BS, ZG, SB) oder Verkehrsinfrastrukturen (BH, FH) zu übermitteln.

3. Reisedienstleistungssystem (1, 2) nach einem der Ansprüche 1 bis 2, wobei die zentrale Kommunikationseinrichtung (MPO) in dem Verkehrsmittel (BS, ZG, SB) oder der Verkehrsinfrastruktur (BH, FH) angeordnet ist oder die zentrale Kommunikationseinrichtung (MPO) entfernt von dem Verkehrsmittel (BS, ZG, SB) oder der Verkehrsinfrastruktur (BH, FH) angeordnet ist.

4. Reisedienstleistungssystem (1, 2) nach einem der Ansprüche 1 bis 3, wobei die zentrale Kommunikationseinrichtung (MPO) dazu eingerichtet ist, mit der mobilen Kommunikationseinrichtung (MP) über eine sichere WLAN-Verbindung oder eine LTE-Verbindung zu kommunizieren.

5. Reisedienstleistungssystem (1, 2) nach einem der Ansprüche 1 bis 4, wobei die Positionsermittlungseinrichtung (MOB, FIB) eine mobile Positionsermittlungseinrichtung (MOB) umfasst, welche in einem Verkehrsmittel (BS, ZG, SB) fest installiert ist.

6. Reisedienstleistungssystem (1, 2) nach einem der Ansprüche 1 bis 5, wobei die Positionsermittlungseinrichtung (MOB, FIB) eine standortgebundene Positionsermittlungseinrichtung (FIB) umfasst, welche in oder an einer Verkehrsinfrastruktur (BH, FH), vorzugsweise einem Bahnhof (BH) oder Flughafen (FH) oder U-Bahnhof, fest installiert ist und eine Positionsinformation (PD) bezüglich der Verkehrsinfrastruktur (BH, FH) bereitstellt.

7. Reisedienstleistungssystem (1, 2) nach einem der Ansprüche 1 bis 6, wobei die Positionsermittlungseinrichtung (MOB, FIB) dazu eingerichtet ist, zusätzlich zu der Positionsinformation (PD) auch eine Identifikationsinformation des zugeordneten Verkehrsmittels (BS, ZG, SB) oder der zugeordneten Verkehrsinfrastruktur (BH, FH) an die mobile Kommunikationseinrichtung (MP) zu übermitteln.

8. Reisedienstleistungssystem (1) nach einem der Ansprüche 1 bis 7, wobei die mobile Kommunikationseinrichtung (MP) einen Programmbaustein umfasst, welcher in eine Mehrzahl von auf der mobilen Kommunikationseinrichtung (MP) gespeicherten Anwendungsprogrammen der einzelnen Reise- oder Verkehrsdienstleister integrierbar ist und dazu eingerichtet ist, eine Kommunikation mit der Mehrzahl von Reisedienstleister-Informationssystemen (TOP1, ... , TOP5) mit Hilfe der zentralen Kommunikationseinrichtung (MPO) und unter Verwendung der von der mobilen Kommunikationseinrichtung (MP) erfassten Positionsdaten (PD) und der auf die Positionsdaten (PD) bezogenen Reiseinformationen (RI) durchzuführen.

9. Reisedienstleistungssystem (1) nach einem der Ansprüche 1 bis 8, ferner aufweisend eine Positionsermittlungseinrichtung-Verwaltungseinrichtung (BME), welche dazu eingerichtet ist, die jeweilige Positionsermittlungseinrichtung (MOB, FIB) näher kennzeichnende Informationen zu speichern und die gespeicherten Informationen auf Anfrage an die zentrale Kommunikationseinrichtung (MPO) zu übermitteln.

10. Reisedienstleistungssystem (1) nach Anspruch 9, wobei die Positionsermittlungseinrichtung-Verwaltungseinrichtung (BME) dazu eingerichtet ist, näher kennzeichnende Informationen bezüglich des Zeitpunkts, an dem eine Positionsermittlungseinrichtung (MOB, FIB) installiert wurde, und bezüglich des Eigentümers der Positionsermittlungseinrichtung (MOB, FIB) zu speichern.

11. Reisedienstleistungssystem (1) nach einem der Ansprüche 1 bis 10, wobei zumindest eine der Mehrzahl von Reisedienstleister-Informationssystemen (TOP1, ..., TOP5) dazu eingerichtet ist, zumindest eine der folgenden Reiseinformationen (RI) über die zentrale Kommmunikationseinrichtung (MPO) der mobilen Kommunikationseinrichtung (MP) zur Verfügung zu stellen:
- Fahrplaninformationen,
- Verfügbarkeit eines Verkehrsmittels (BS, ZG, SB),
- Kapazitätsauslastung eines von dem zugeordneten Reise- oder Verkehrsdienstleister betriebenen Verkehrsmittels (BS, ZG, SB),
- Buchungsinformationen betreffend ein von dem zugeordneten Reise- oder Verkehrsdienstleister betriebenes Verkehrsmittel (BS, ZG, SB),
- geografische Lageinformation zu einer Verkehrsinfrastruktur (BH, FH).

12. Reisedienstleistungssystem (1) nach einem der Ansprüche 1 bis 11, aufweisend zusätzliche Datenbanken, welche mit der zentralen Kommmunikationseinrichtung (MPO) über eine Datenverbindung verbunden sind und welche Informationen bezüglich für Reisende relevanter Dienstleistungen und Warenangebote speichern, wobei die zusätzlichen Datenbanken über die zentrale Kommmunikationseinrichtung (MPO) mit der mobilen Kommunikationseinrichtung (MP) zur Informationsübermittlung verbindbar sind.

13. Reisedienstleistungssystem (1) nach einem der Ansprüche 1 bis 12, wobei die Positionsermittlungseinrichtung (MOB) eine Sensorvorrichtung aufweist, mit
- einer Anzahl von Sensoren, welche dazu ausgebildet sind, eine Bewegung der Sensorvorrichtung und/oder physikalische Größen einer Umgebung der Sensorvorrichtung zu erfassen und entsprechende Messwerte auszugeben;
- einem Datenspeicher, welcher dazu ausgebildet ist, zu vorgegebenen Positionen auf einer vorgegebenen Route Referenzmesswerte für die Sensoren zu speichern; und
- einer Recheneinrichtung, welche dazu ausgebildet ist, die von den Sensoren ausgegebenen Messwerte mit den gespeicherten Referenzmesswerten zu vergleichen und bei einer Übereinstimmung der von den Sensoren ausgegebenen Messwerte mit den Referenzmesswerten die den jeweiligen Referenzmesswerten entsprechende Position als die aktuelle Position der Positionsermittlungseinrichtung (MOB) zu ermitteln.

14. Verfahren (100) für die Kommunikation eines Reisenden (R) mit einer Mehrzahl von unterschiedlichen Reise- und Verkehrsdienstleistern (TOP1, ..., TOP5), wobei
- mit Hilfe einer mobilen, einem Reisenden zugeordneten Kommunikationseinrichtung (MP) drahtlos mit anderen Kommunikationseinrichtungen (MPO, MOB, FIB) kommuniziert wird, indem von einer Positionsermittlungseinrichtung (MOB, FIB), welche einem Verkehrsmittel (BS, ZG, SB) räumlich fest zugeordnet ist oder einer Verkehrsinfrastruktur (BH, FH) eines Reise- oder Verkehrsdienstleisters räumlich zugeordnet ist, aktuelle Positionsdaten (PD) und positionsdatenbezogene Reiseinformationen (RI) empfangen werden, und
- mit einer Mehrzahl von Reisedienstleistungssystemen (TOP1, ..., TOP5), welche jeweils einem Reise- oder Verkehrsdienstleister zugeordnet sind, über eine zentrale, von den einzelnen Reise- oder Verkehrsdienstleistern (OP) unabhängige Kommunikationseinrichtung (MPO) kommuniziert wird, wobei die zentrale Kommunikationseinrichtung (MPO) von der mobilen Kommunikationseinrichtung (MP) Positionsdaten (PD) und/oder auf diese Positionsdaten (PD) bezogene Reiseinformationen (RI) empfängt und auf Basis dieser Daten (PD, RI) geeignete Reisedienstleister-Informationssysteme (TOP1, ..., TOP5) automatisiert adressiert und eine Kommunikationsverbindung zwischen der mobilen Kommunikationseinrichtung (MP) und den adressierten Reisedienstleister-Informationssystemen (TOP1, ..., TOP5) herstellt.
